# EUROPEAN PATENT SPECIFICATION

(11) **EP 2 858 886 B1**
(45) Date of publication and mention of the grant of the patent: **06.09.2017**
(21) Application number: 13742054.3
(22) Date of filing: 07.06.2013
(51) Int. Cl.: B62M 11/00, B62M 1/12, B62M 1/30

(54) **HAND AND FOOT, MOTOR DRIVEN VEHICLE, IN PARTICULAR BICYCLE**
HAND- UND FUSS-, MOTORBETRIEBENES FAHRZEUG, INSBESONDERE FAHRRAD
VÉHICULE MOTORISÉ À COMMANDE MANUELLE ET À COMMANDE À PÉDALE, EN PARTICULIER VÉLO

(30) Priority: 07.06.2012 NL 1039659
(43) Date of publication of application: 15.04.2015
(73) Proprietor: Chiniforoushan, Mahmoud, 7327 JR Apeldoorn (NL)
(72) Inventor: Chiniforoushan, Mahmoud, 7327 JR Apeldoorn (NL)
(74) Representative: Verdijck, Gerardus
(86) International application number: PCT/NL2013/000032
(87) International publication number: WO 2013/191536

(56) References cited:
- EP-A2- 0 069 932
- EP-A2- 0 197 569
- CN-A- 101 633 384
- CN-A- 101 700 804
- CN-U- 201 678 009
- KR-A- 20100 085 812

## Description

### Background

Vehicles of the aforementioned type are known in the state of the art.

### Comparison 1: bicycle 2.W versus bicycle 200910017427.1

- The first disadvantage of the known bicycle is that the rider has to perform with his hands two different tasks in one direction with the hand drive member.
- First task: in order to drive the vehicle, the hand drive member must be moved forward and backward in a horizontal direction.
- Second task: in order to steer the vehicle, the hand drive member must be turned slightly to the right or left slantwise during the reciprocating movement. This means that, when driving the vehicle, the rider has to continuously exert 100% equal force with his hands to both handles. Otherwise, the front wheel will turn to the right or left, without the rider being able to exert any control or having any choice, and both the rider and the bicycle will fall.

Solution: Newly invented bicycles 2.W do not have this disadvantage. In order to drive the vehicle, the hand drive member must be moved forward and backward in a horizontal direction and, in order to steer, the hand drive member must be turned vertically in the opposite direction. As explained on, the rider can also easily perform the above-mentioned tasks with one hand.
- The second disadvantage of the known bicycle is that the hands must push the hand drive forward and pull it backward 100% of the fixed length (completely) in order to maintain the constant movement of the bicycle. Otherwise, the crankshaft cannot pass each 180° (halfway round the circle), which means that pulling back the hand drive member before it has been moved completely forward or backward does not have any effect on the crankshaft rotation and the constant movement of the bicycle.

Solution: Newly invented bicycles 2.W do not have this disadvantage. Because of the first coupling assembly 110 the hands can move the hand drive member in another direction at any time, without this having any further effect on the constant movement of the bicycle (explanation to be found on page 6).

### Comparison 2: bicycles 2.W versus bicycle CN201678009 U

- The first disadvantage of the known bicycle is exactly the same as the first disadvantage of the known bicycle 200910017427.1, which has been explained above. The rider has to perform with his hands two different tasks in one direction with the hand drive member.
- The second disadvantage of the known bicycle is that the hand drive and foot drive are connected with each other. The hand drive is connected with the crankshaft by means of a rod. In order to drive the bicycle, the hands and feet must continuously work together and can never move individually.

Solution: Newly invented bicycles 2.W do not have this disadvantage. In order to drive the vehicle using the third coupling assembly 310, the hand drive and foot drive can be operated both independently and jointly.

### Comparison 3: bicycles 2.W versus wheelchair 101700804A

The disadvantage of the known wheelchair is related to the fact that the rod 4 on the crankshaft is connected with the wheelchair wheel by means of a freewheel mechanism. In order to drive the vehicle, the hands must push the hand drive forward and pull it backward 100% of the fixed length (completely). This is exactly the same disadvantage as the second disadvantage of the known bicycle 200910017427.1, which has been explained above.

### Comparison 4: bicycles 2.W versus bicycle 0085812

- The first disadvantage of the known bicycle is that the rider has to perform with his hands two different tasks with the hand drive member. This is exactly the same disadvantage as the first disadvantage of the known bicycle 200910017427.1.
- The second disadvantage of the known bicycle is related to the construction and operation of the hand drive member. The rider must pull the steering rod upward and push it downward with his hands. This way of operating the hand drive member has exactly the 100% reverse positive property of lever. The shoulders function as the lever shaft and the rider's hands as the lever head. As the hands and shoulders (lever shaft) are wide apart, the rider cannot exert much force to drive the vehicle.

Solution: Newly invented bicycles 2.W do not have this disadvantage as the hand drive member must be moved forward and backward in the horizontal direction.

### Comparison 5: bicycles 2.W versus tricycle 0069932

The document EP0069932, which represents the closest prior art according to the preamble of the independent claim 1 is described here.

The disadvantage of the known tricycle is that it does not have constant movement. An operating stroke is made when the hands pull in the hand drive member (towards the chest) and an idle stroke is made when the feet pull out the foot drive member (forward) in the opposite direction. That is why the drive is not constant.

Solution: Newly invented bicycles 2.W do not have this disadvantage because of the first coupling assembly 110. The reciprocating movements of the hand drive member by the hands and the foot drive member by the feet, both independently from each other and jointly, ensure the constant movement of bicycles 2.W.

### Comparison 6: bicycle 2.W versus bicycle 0197569

The disadvantage of the known bicycle is that it does not have constant movement. The bicycle can only be moved when the hands pull in the hand drive member (towards the chest) and an idle stroke is made when the hand drive member is moved in the opposite direction. That is why the drive is not constant. This vehicle does not have a foot drive. Solution: Newly invented bicycles 2.W do not have this disadvantage because of the first coupling assembly 110. The reciprocating movements of the hand drive member by the hands and the foot drive member by the feet, both independently from each other and jointly, ensure the constant movement of the bicycle.

### Comparison between motors 2.W and current motors:

Instead of a piston rod and crankshaft in current motors, the present invention uses the second coupling assembly 210 and/or first coupling assembly 110 of the bicycles 2.W to drive the drive shaft of motors 2. Four examples of the benefits of this system in comparison with current motors:
1-Weight, type of material, construction, operation, parts and connection of the crankshaft and piston rod are expensive.

Solution: Constructing the second coupling assembly is not more expensive than constructing the second coupling assembly 210 or the first coupling assembly 110.
2-Friction: in the current motors, when the motor drive shaft makes one rotation, the inner surface of the valve bush and the outer surface of the crankshaft make contact for a complete rotation and because of the little distance between these two surfaces, the oil lubrication cannot be 100% good.

Solution: One rotation of the drive shaft in motors 2.W is divided between all the teeth of the gears of the second coupling assembly 210. As the parts of the second coupling assembly 210 are located in an oil sump (like the differential gears) the friction is almost nil and the parts work properly for a very long time.
3-Because of the friction between the piston rod and the crankshaft, the oil and oil filter must be replaced every couple of thousand kilometers.

Solution: because of the little friction between the teeth of the gears of the second coupling assembly, the oil can be used for a very long time (like the differential oil) and this system does not need an oil filter.
4-maintenance and replacement of the crankshaft, drive shaft and other parts of the current motors, which usually take place around the same time, are expensive.

Solution: replacement of the gears and parts of motors 2.W is very cheap in comparison with the current motors.

### Short description of the figures:

Figure 1 is a schematic perspective view of an embodiment of a hand and foot driven vehicle 1 (2.W).
Figure 2 is a schematic perspective view of an embodiment with an identical version of the hand and foot drive of vehicle 2 (2.W).
Figure 3 is a schematic top view of the hand and foot drive of vehicle 1 (2.W).
Figure 4 is a schematic top view of the steering device 400-1 of vehicle 1.
Figure 5 is a schematic top view of the hand and foot drive of vehicle 2.W. (First bicycle of twin)
Figure 6 is a schematic top view of the steering device 400-2 of vehicle 2.
Figure 7 is a schematic top view of the hand and foot drive of vehicle 2.W. (Second bicycle of twin)
Figure 8 is a schematic top view of the hand and foot drive of vehicle 2.W. (Third bicycle of twin)
Figures 9A, 9B are schematic side views of the adjustable system consisting of the hand and foot drive members of vehicle 2.W.
Figure 10 is a schematic side view of a wheelchair with the hand drive of vehicle 2.W
Figure 11A is a schematic side view of a first motor 2.W with two cylinders.
Figure 11B is a schematic top view of a first motor 2.W with two cylinders.
Figure 12 is a schematic side view of a second motor 2.W with two cylinders.
Figures 13A, 13B, 13C are schematic side views of a third motor 2.W with two cylinders.
Figure 14 is a schematic side view of a fourth motor 2.W with two cylinders.

### Detailed explanation of the invention:

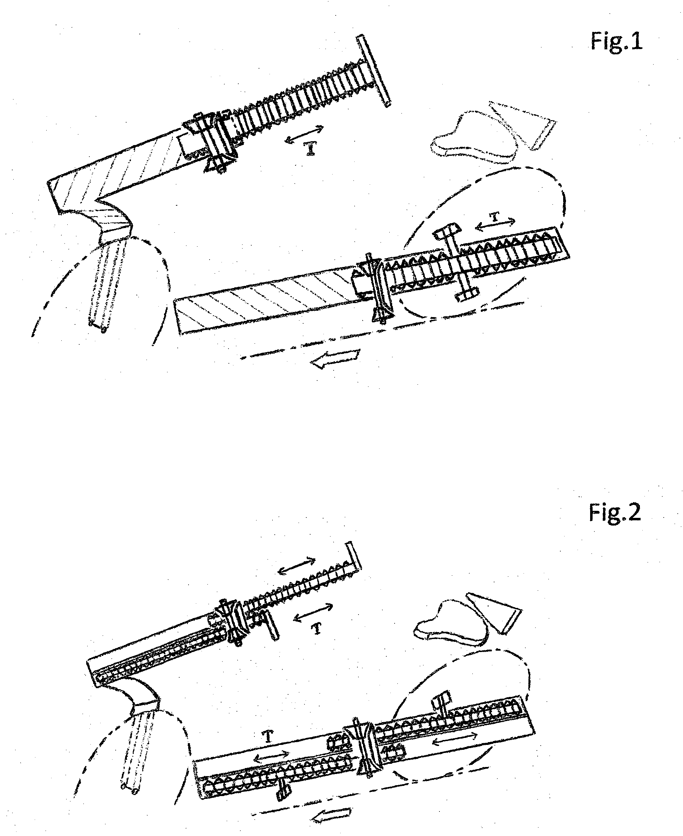

Figures 1 and 2 show a schematic perspective view of an embodiment of a hand and foot driven vehicle according to the invention. In the embodiments, the vehicles are shown as a bicycle with a front wheel 13 and a rear wheel 14, of which the rear wheel 13 is driven. It should be noted that the present invention is not limited to rear wheel driven bicycles. For example, the vehicle may also be embodied as a tri-, four- or more wheel version of which one or more wheels are driven.

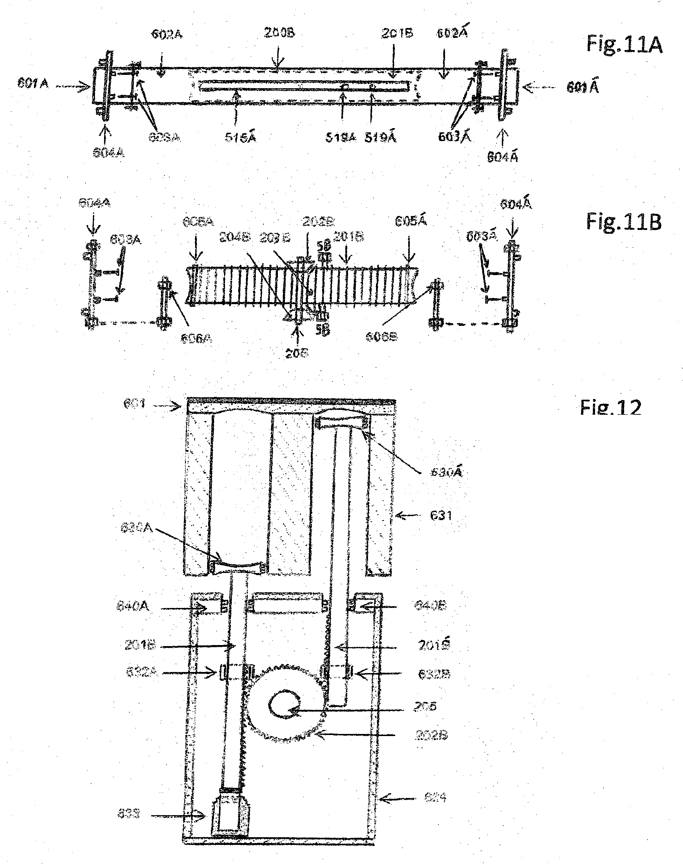

Figures 11 to 14 show a schematic perspective view of embodiments of various motors according to the present invention. In the embodiments, the drive shaft 205 is driven by motors 2.W. It should be noted that these motors can drive many different drive shafts of current motors.

The vehicle comprises a saddle 7 equipped with a back 6. In order to drive the vehicle, it is further equipped with four different hand drives 100-1 to 4 and four different foot drives 200-1 to 4. As will be explained below, both drives can be connected to each other, preferably in such a way that the hand drive 100-1 and foot drive 200-1 can be used both independently and jointly to drive the vehicle.

In the order of bicycles 2.W, the construction and operation of hand drives 100-1 to 4 and foot drives 200-1 to 4 will be described first, then the connection of both drives with the rear wheel, then the steering device, then the connection of the hand drives 1 to 4 with the wheelchair, then the fifth coupling assembly and finally the construction and operation of motors 1 to 4 will be discussed.

The embodiments below are only examples. All types of hand drives and foot drives and motors can be embodied by other assemblies.

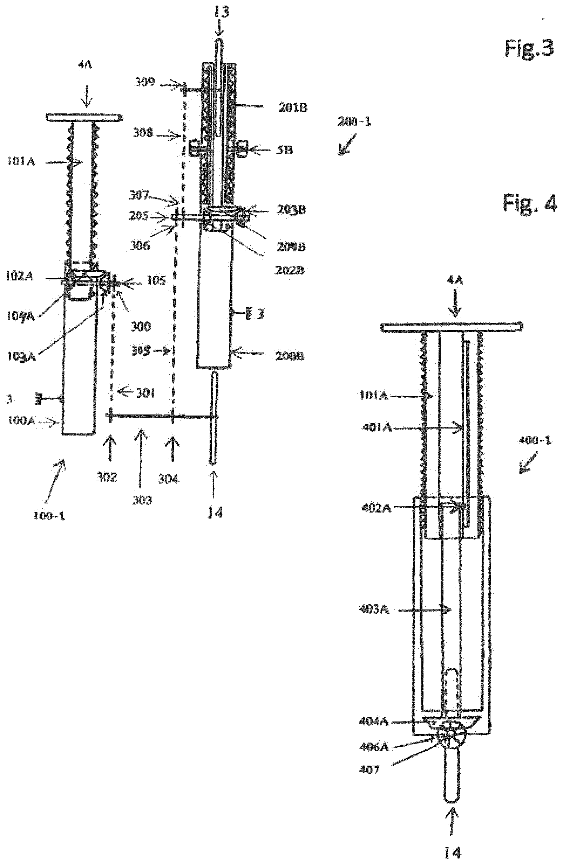

According to the present invention in Figure 3, the first bicycle 2.W is equipped with a hand drive 100-1 and a foot drive 200-1, of which the hand drive member 4A and foot drive member 5B must be moved in a straight line in a longitudinal direction T to drive the first drive shaft 105.

### Construction of hand drive 100-1

The hand drive member 4A is at one end fixedly connected with the driving rod 101A and at the other end located in the bush 100A. The bush 100A ensures that the driving rod 101A always remains in its place. The teeth of the driving rod always make contact with the teeth of the underlying gear of the first coupling assembly 110.

The hand drive member 4A is connected with a substantially laterally extending first drive shaft 105 by means of the first coupling assembly 110. The first drive shaft 105 is bearing-mounted, rotatable around its axis, and connected with the bush 100A of the vehicle. The connection between the hand drive member 4A and first drive shaft 105 as established by the first coupling assembly 110 is such that the first drive shaft 105 is driven in the longitudinal direction T and more particularly in one and the same constant forward rotation direction both during the forward and backward movement of the hand drive member 4A. For this purpose, the first coupling assembly 110 can be designed in various ways.

In the present invention, the first coupling assembly 110 comprises a gear assembly. This gear assembly comprises a first gear 102A which is mounted by means of a freewheel mechanism to the first drive shaft 105 in such a way that it can freely rotate around this shaft in a first rotation direction, while it fixedly engages the first drive shaft 105A in a second rotation direction that is opposite to the first rotation direction and carries it in the forward rotation direction. The gear assembly further comprises a second gear 103A which is mounted by means of a freewheel mechanism to the first drive shaft 105 in such a way that it can freely rotate around this shaft in a second rotation direction, while it fixedly engages this shaft 105 in a first rotation direction and carries it in the forward rotation direction.

The gear assembly further comprises a third gear 104A that is bearing-mounted to the bush 100A of the vehicle, rotatable around an axis extending substantially perpendicularly to the first drive shaft 105, and that interconnects the first gear 102A and second gear 103A in such a way that the first gear 102 always has a rotation direction that is opposite to that of the second gear 103.

In the present invention, the first, second, and third gears 102, 103, 104 of the gear assembly of the first coupling assembly 110 are conical gears with round teeth. The teeth can have various designs, for example spur teeth, etc.

### The operation of the hand drive 100-1

In use, the rider holds the hand drive member 4A of the vehicle. He then stretches his arms, which involves that the teeth of the driving rod 101A are carried over the first gear 102A.

When the first gear 102A runs free in a backward rotation direction, it will engage the first drive shaft 105 when it is driven in the forward rotation direction and carry it in the forward rotation direction. At the same time, the first gear 102A will drive the second gear 103A in its free-running backward rotation direction through the third gear 104A, which has no further effect.

When the rider has pushed the driving rod 101A over a desired distance, the rider pulls his arms towards his chest, which involves that the teeth of the driving rod 101A are carried over the first gear 102A again, but this time in a backward free-running direction. As a result, the second gear 102A is rotated in a forward rotation direction through the third gear 104A, which again has the effect that the first drive shaft 105 is driven in the forward rotation direction.

In short: by moving the hand drive member 4A forward and backward, the first drive shaft 105 remains rotating in a forward rotation direction. Sometimes this is effectuated by the constant forward rotation of gear 102A and sometimes by the constant forward rotation of gear 103A.

### Foot drive 200-1

The construction and operation of the foot drive 200-1 for driving the second drive shaft 205 are exactly the same as the construction and operation of the hand drive 100-1, as explained above. The only difference is that the foot drive parts are numbered 200B and higher.

In short: by moving the foot drive member 5B forward and backward, the second drive shaft 205 remains rotating in a forward rotation direction. Sometimes this is effectuated by the constant forward rotation of gear 102B and sometimes by the constant forward rotation of gear 103B.

### Third coupling assembly 310

The third coupling assembly 310 is built for driving the vehicle. As has been described above, the first drive shaft 105 is driven by moving the hand drive member 4A forward and backward. By means of the parts of the third coupling assembly 310, numbered 300 to 306, the rotation of the first drive shaft 105 is transferred to the second drive shaft 205 (gear 306 is mounted to the second drive shaft 205 by means of a freewheel mechanism). As has also been described above, the second drive shaft 205 is also driven by the forward and backward movement of the foot drive 5B. The rotation of the first drive shaft and second drive shaft, both independently and jointly, is transferred to the rear wheel 13 by parts 307, 308 and 309 of the third coupling assembly 310 in order to drive the vehicle.

### Steering device 400-1

This vehicle is further equipped with a steering device 400-1, as shown in Figure 4. The driving rod 101A is provided with a keyway 401A in the inside (to prevent one end of key 402A from slipping out during the forward and backward movement of the driving rod 101A). The other end of key 402A is fixed to one end of rod 403A. Gear 404 is fixed to the other end of rod 403A (gear 404 is located in bush 100A and has sufficient space on all sides to rotate when the hand drive member 4A rotates).

When the rider turns the hand drive member 4A leftward, the driving rod 101A, key 402A, keyway 401, rod 403A and gear 404A are rotated leftward as well. When gear 404A rotates, gear 406 that is fixedly mounted to the steering housing 407A rotates as well. When the steering housing 407A is rotated, the front fork 8 and front wheel 14 rotate leftward. When the rider turns the hand drive member 4A rightward, all the above-mentioned parts and the front wheel 14 rotate rightward as well.

### Hand drive 100-2

In the present invention in Figure 4, the vehicle is equipped with a hand drive 100-2 and a foot drive 200-2. The hand drive members 4A and 4Á and foot drive members 5B and 5B́ must be moved in a straight line in a longitudinal direction T to drive the first drive shaft 105/the vehicle. They are interconnected in such a way that a forward movement of either of them corresponds with a backward movement of the other.

The operation and construction of the hand drive 100-2 are similar to those of the hand drive 100-1 as shown in Figure 3.

In order to build an identical version of the first coupling assembly 110, the hand drive member 4Á, driving rod 101Á and bush 100Á are needed in addition to the hand drive member 4A, driving rod 101A and bush 100A. The construction of the gear assembly is the same as that of the hand drive 100-1. The teeth of the first gear 102A make constant contact with the teeth of the driving rod 101A and the teeth of the second gear 103A now make contact with the teeth of the driving rod 101Á. The third gear 104 connects the first gear 103A with the second gear 104A in such a way that the first gear always rotates in a rotation direction opposite to that of the second gear and vice versa.

### Foot drive 200-2

The construction of an identical version of a foot drive 200-2 is exactly the same as the construction of the hand drive 100-2 (as explained above). The only difference is that the foot drive parts are numbered 200B, 200B́ and higher. In order to drive the second drive shaft 205, the rider must move the foot drive members 5B, 5B́ forward and backward with his feet.

The construction and operation of the third coupling assembly 310 to drive the vehicle are exactly the same as those of the third coupling assembly 310 of the hand drive 100-1. The explanation can be found on page 8. This vehicle can be driven by both drives independently or jointly.

### Steering device 400-2

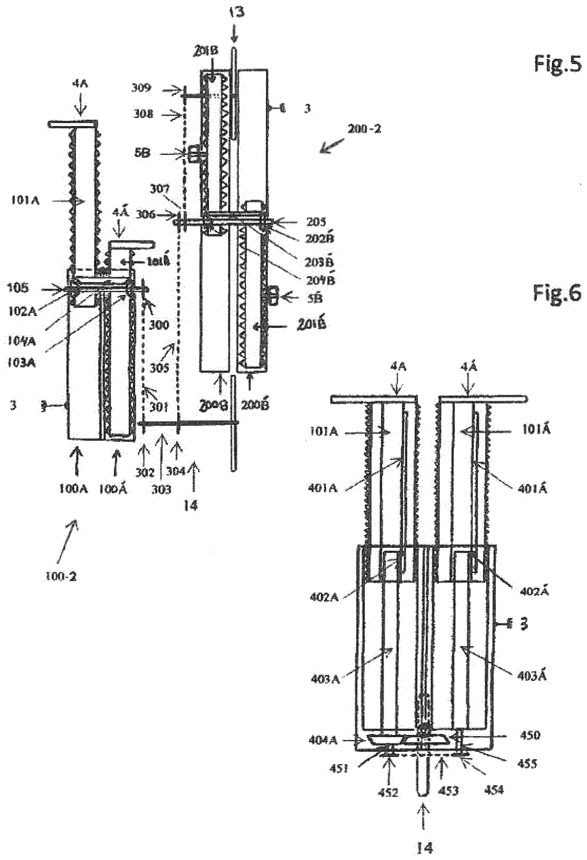

The steering device 400-2 of Figure 6 is built to steer this vehicle. The steering device 400-2 is identical to the steering device 400-1, the only difference being that the parts of the identical version are numbered...

The only difference is that the parts of the second version have the same numbers and numbers followed by Á. Furthermore, parts 450 to 455 are used to connect these twin versions.

When the rider turns the hand drive members 4A and 4Á to the right or left, either independently or jointly, the front wheel 14 is turned to the right or left by the same system/operation of the steering device 400-1 (the explanation can be found on page 8).

### Hand drive 100-3

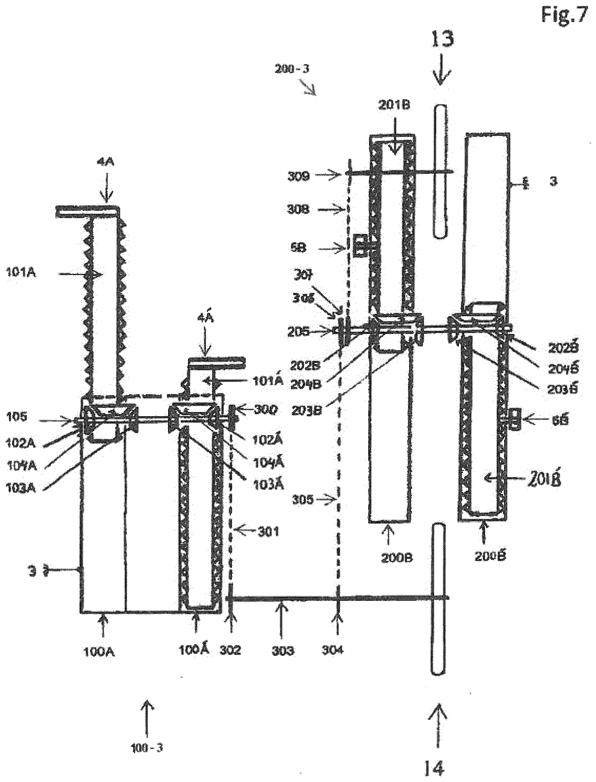

In the present invention in Figure 7, the vehicle is equipped with a hand drive 100-3 and a foot drive 200-3. The hand drive members 4A and 4Á and foot drive members 5B and 5B́ can be moved forward and backward in a longitudinal direction *T* in three different ways to drive the first drive shaft 105/the vehicle. These three ways are:
- 1st with one hand or one foot
- 2nd with both hands or both feet together
- 3rd by moving the hands or feet in opposite directions.

Hand drive 100-3 is identical to hand drive 100-1. The construction and operation of this twin version for driving the first drive shaft 105 are exactly the same as those of hand drive 100-1 (the explanation can be found on page 6).

### Foot drive 200-3

Foot drive 200-3 is identical to foot drive 200-1. The construction and operation of this twin version for driving the second drive shaft 205 are exactly the same as those of foot drive 200-1 (the explanation can be found on page 7).

In order to drive the vehicle, a third coupling assembly 310 is used in this case as well, the construction and operation of which are the same as those of coupling assembly 310 of hand drive 100-1.

The construction and operation of the steering device of this vehicle are exactly the same as those of steering device 400-2 of Figure 6 (the explanation can be found on page 9).

### Hand drive 100-4

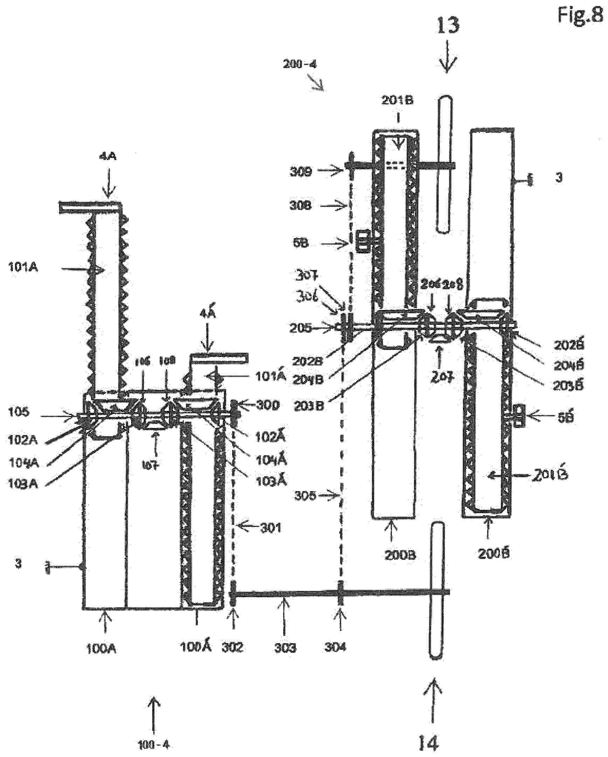

According to the present invention in Figure 8, this vehicle is equipped with a hand drive 100-4 of which the hand drive members 4A and 4Á can be moved forward and backward in a longitudinal direction T in four different ways to drive the first drive shaft 105/the vehicle. Three of these ways are the same as those of hand drive 100-3. By adding gears 106, 107, 108 to the gear assembly of the first coupling assembly 110, the fourth way of driving is constructed moving forward and backward in the opposite direction corresponding to each other.

Also in this case, hand drive 100-4 is identical to hand drive 100-1. The construction and operation of each hand drive of this twin version for driving the first drive shaft 105 are exactly the same as those of hand drive 100-1 (the explanation can be found on page 6). The construction of the fourth drive is as follows:
Gear 106 is at the rear side permanently connected with gear 104A and gear 107 is at the rear side permanently connected with gear 104Á. Gear 108 (which is connected with bushes 100A and 100Á by means of bearings) ensures that the rotation of gear 106 is transferred to gear 107 and vice versa. If gear 108 is not connected with gears 106 and 107, the vehicle is driven in the other three ways.

The construction and operation of foot drive 200-4 are the same as those of hand drive 100-4, as explained above. The only difference is that the three gears for the fourth way of driving the vehicle are numbered 206, 207, and 208.

Furthermore, in order to drive the vehicle, the third coupling assembly of hand drive 100-1 is used. The construction and operation of the steering device of this vehicle are exactly the same as those of steering device 400-2.

### Fifth coupling assembly 510

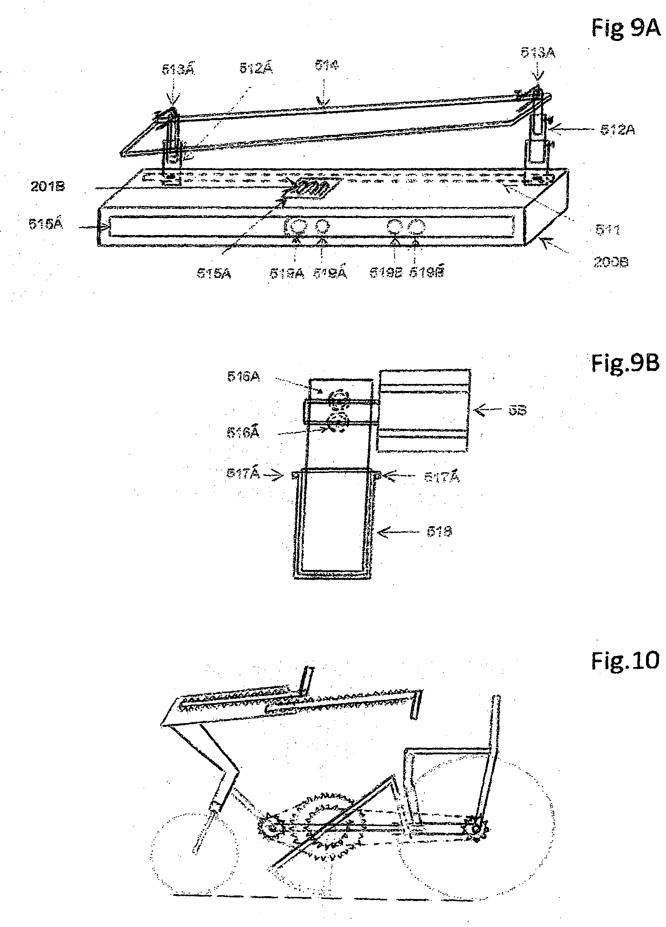

According to the present invention in Figure 9, the fifth coupling assembly 510 allows the rider to determine in which way the feet move the pedals and the hands move the hand drive member or members in order to drive the vehicle, for example at an angle at various degrees, wave-shaped, etc.

As the length of the pedals can be adjusted for people with foot or hand disabilities, for example people with one shorter leg or shorter arm, they can use bicycles 2.W without any problems.

### Construction of the fifth coupling assembly

Key 509A is fixedly connected at the bottom side of the telescope 512A and key 509Á is fixedly connected at the bottom side of the telescope 512Á (there are no restrictions as to the number of telescopes; this depends on which shape the rider has given to the flexible blade 514). Keys 509A and 509Á are located in keyway 511. Telescopes 512A and 512Á can be moved forward and backward in keyway 511 and can be locked at any location on the keyway. Keyway 511 is fixed at the rear side of bush 200B. The length of both telescopes can only be adjusted and locked vertically. Clamp 513A is fixed at the top of telescope 512A and clamp 513Á is fixed at the top of telescope 512Á. One side of the flexible blade 514 is fixed between both clamps and the other (opposite) side is loosely located between the ball bearings 516A, 516Á of telescope 518 in Figure 9B (telescope 518 can only be extended vertically). Holes 517A, 517Á are located at the sides of telescope 518. The drive member 5B is mounted at the top of telescope 518.

Holes 519A, 519Á are located at the side of the driving rod 201B. There are no restrictions as to the number of holes, which allows the rider to lock telescope 518 in any desired hole of the driving rod 201.

Holes 517A, 517Á are fixedly connected with holes 519A, 519Á. Some of the teeth of the driving rod 201B protrude from gap 515A of bush 200B and make contact with the teeth of gear 201B. This fifth coupling assembly is fixed to bush 200B́ using the same construction. This system can also be coupled with all other hand and foot drives of bicycles 2.W with the same construction and operation.

### The operation of the fifth coupling assembly

In this case, the forward and backward movement of the foot drive member for driving driving rod 201B depends on the shape of the flexible blade 514, which is determined by the feet movements of the rider.

### Construction and operation of the wheelchair

According to the present invention in Figure 10, the wheelchair is equipped with a hand drive 100-2. The wheelchair can be connected to all hand drives 1 to 4 of bicycles 2.W.

Driving the wheelchair using the third coupling assembly for transferring the rotation from the first drive shaft 105 to the rear wheel is effectuated by parts 300 to 304 and 309 (box). The construction and operation are exactly the same as those of the third coupling assembly of hand drive 100-1 of bicycle 2.W.

And steering devices 400-1 and/or 400-2 are used to steer the wheelchair.

### Short explanation of motors 2.W

These motors can help the rider to drive the vehicle.

In current motors, the drive shaft is driven by a rod and crankshaft.

In motors 2.W according to the present invention in Figures 11, 12, 14, the drive shaft 205 (the shaft of this motor) is driven by the reciprocating movement of the piston or pistons and by the operation of the second coupling assembly 210 of bicycles 2.W, which has the same construction and operation as explained before on page 7. The other parts of these motors are the same as those of various current motors.

In motors 2.W according to the present invention in Figure 1-3, the drive shaft 205 (the motor shaft) is driven by one gear that is fixedly connected with the motor drive shaft by means of a freewheel mechanism.

All motors operate on various fuels.

These motors can be used to drive all bicycles 2.W and to drive the drive shaft of various current motors.

### Construction of first motor 2.W

In motors 2.W according to the present invention in Figures 11A, 11B, the cylinder head 601A is fixed to one end of the bush 200B. The valve 603A and valve shaft 604A are placed at the inside of the cylinder 602A. Figure 11B shows three keys on the valve shaft 604 and the rotation system of the valve shaft 604. The function of key 1 is to open and close the valve 603. The function of key 2 is to transport the fuel to the piston head. The function of key 3 is to transport electricity for the ignition at the piston head and cylinder 602A. The head of the driving rod 201B is closed (to make it function as a piston for the motor). A ring surrounds the piston 605A. Gear 606A is rotated when the teeth of the driving rod 201B make contact with the teeth of this gear by the reciprocating movement of the foot drive member 5B. When gear 606A rotates, the coupled system and valve shaft 604A rotate as well. The second cylinder head 601Á is fixed at the other end of bush 200B. Adding the above-mentioned parts with the same construction results in a motor with two cylinders.

### The operation of first motor 2.W

When the sparking plug is contacted by fuel, this motor is standby. When one end of the driving rod 201B makes contact with the cylinder head 601A, an ignition takes place and as a result, the driving rod is moved. When the other end of the driving rod 201B makes contact with cylinder head 601Á, another ignition takes place and the driving rod 201B moves in the opposite direction. The foot drive member 5B that is fixed to the driving rod 201B moves at the same time.

The vehicle is driven by the reciprocating movement of the driving rod 201B and the rotation of the gear 202B and second drive shaft 205. In order to build this motor with two cylinders, the cylinder heads 601A, 601Á are added to both ends of the bush 200B. The other parts for driving the motor-equipped vehicle are the same as those of the foot drive of bicycle 2.W (the construction and operation of the second coupling assembly 210 can be found on page. The driving rod 201B́ can also drive the drive shaft of this motor using the same construction and operation.

In order to add multiple cylinders to this motor, a second drive shaft is connected to the shaft of this motor.

### Construction of second motor 2.W with two or more cylinders

In motors 2.W according to the present invention in Figure 12, the piston 630A is at its bottom side fixedly connected to the untoothed end of the driving rod 201B. The bush 200B is located around the driving rod. The other toothed end of the driving rod 201B is inside the bush 200B. The toothed end of the driving rod 201B is fixedly connected with the hydraulic telescope 633. The cylinders 602A, 602Á are located at the other end of the hydraulic telescope 633 and they are fixedly connected to the inside of the oil sump 634.

The piston 630Á is placed in the driving rod 200B́ with the same construction as that of 630A.

### Operation of second motor 2. W with two or more cylinders:

The first ignition at the cylinder head 601A moves the piston and teeth of the driving rod 201B down. As a result, gear 202B is rotated. The rotation of gear 202B moves the teeth at the other side of gear 202B and the teeth of the driving rod 201B and piston 630Á up. The second ignition at the cylinder head 601Á results in a movement in the opposite direction. The negative and positive rotations of gear 202B ensure that the second drive shaft 205 only moves in the forward direction.

In order to add two new pistons, pistons three and four are fixedly connected to the first two pistons in such a way that the teeth of the corresponding drive shafts 201B, 201B́ make contact with both sides of gear 204. In order to add two other pistons with the same construction, pistons five and six are fixedly connected to pistons one, two, three and four in such a way that the teeth of the corresponding driving rod 201B, 201B́ make contact with both sides of a gear that is fixed with a suitable distance at the rear side of gear 203.

In order to add more pistons, multiple gears are fixed with a suitable distance at the rear side to second gear 201B.

Another way of adding more pistons is to connect one end of the second drive shaft 205 of this motor to the second drive shaft of the second coupling assembly 210 or multiple coupling assemblies. Subsequent pistons are connected to previous pistons with the same construction and operation as described above. The ignition time of each two pistons that operate in opposite directions and with one gear may be different from the ignition time of two other pistons.

The reciprocating movement of pistons 630A, 630Á is slowed down or stopped by the hydraulic system 633. The force that is saved in this way is used to move the pistons 630A, 630Á.

### Third motor 2.W

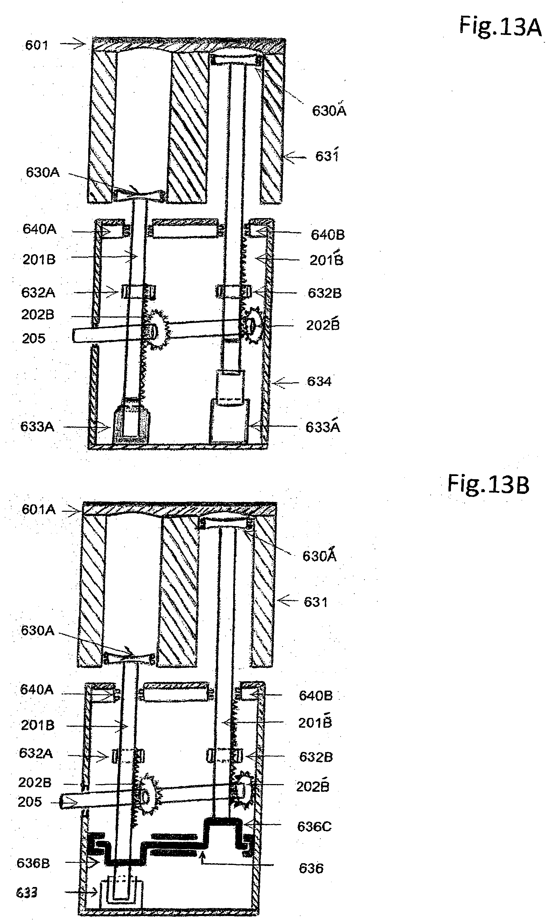

According to the present invention in Figure 13A, as a result of each ignition of pistons 630A, 630Á for driving the second drive shaft 205, the teeth of the drive shaft 201B, 201B́ cause a separate rotation of gears 202B, 202B́ and each piston is returned by the hydraulic system 633A, 633Á. This motor can have more cylinders with the same construction and operation as described above.

### Third motor 2.W

According to the present invention in Figure 13B, both ends of the driving rod 201B, 201B́ are bearing-mounted to the ends of the swing plate 636. When one cylinder moves down the other cylinder moves up because of the operation of the swing plate. The reciprocating movement of the pistons is slowed down or stopped by hydraulic system 633A, 633Á. Each piston is returned by the hydraulic system that is located at the bottom of each piston.

### Third motor 2.W

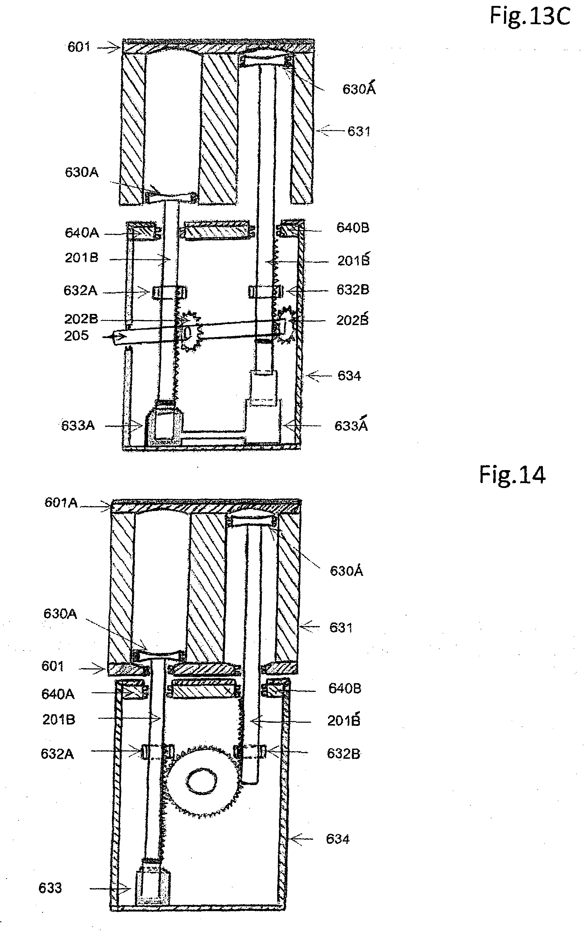

According to the present invention in Figure 13C, hydraulic systems 633A, 633Á are coupled to each other at the sides. As a result, when a piston moves down, the oil in the underlying hydraulic system is pumped and the other piston moves up. The gears of this motor are mounted to the drive shaft by means of a freewheel mechanism.

### Construction of fourth motor 2.W in Figure 14

This motor has the same construction as the motor in Figure 12.

According to the present invention in Figure 14, the second cylinder head 601Á is fixedly connected at the bottom side of both cylinders of this motor and can also be fixed to all of the bottom sides of the cylinder or cylinders of motors 2.W. The cylinder head is provided with holes 635A, 635Á. Each hole is surrounded by a ring that was passed through those holes by driving rods 201B, 201B́.

### Operation of fourth motor 2.W

As a result of two ignitions of each piston at the top and bottom side, each piston moves up.

This motor can also be built with more cylinders. Each two cylinders can have different ignition times from the other two cylinders. The hydraulic system 633 slows down the reciprocating movements of all pistons near the end.

Although the present invention was explained hereinabove by some illustrated embodiments, it should be noted that the invention is not limited to these embodiments. A person skilled in the art can make various adjustments and modifications to the described embodiments without leaving the intention and scope of the invention as defined in the following claims.

### List of used reference numbers

1 Hand and foot driven vehicle
2 Identical version of a hand and foot driven vehicle
3 Frame
4A, 4Á Hand drive member/steering rod
5B, 5B́ Foot drive member/pedal
6 Back
7 Saddle
8 Front fork
9 Rear fork
13 Rear wheel
14 Front wheel

100-1 Hand drive
100-2Hand drive
100-3 Hand drive
100-4Hand drive
100A, 100Á Bush
101A, 101Á Hand driving rod
102A, 102Á First gear
103A, 103Á Second gear
104A, 104Á Third gear
105 First drive shaft
106 Gear
107 Gear
108 Gear
110 First coupling assembly (101, 102, 103, 104)

200-1 Foot drive
200-2Foot drive
200-3Foot drive
200-4Foot drive
201B, 201B́ Foot driving rod
202B, 202B́ First gear
203B, 203B́ Second gear
204B, 204B́ Third gear
205 Second driving rod
206 Gear
207 Gear
208 Gear
210 Second coupling assembly (201, 202, 203, 204)

300 Gear
301 Sprocket
302 Gear
303 Drive shaft
304 Gear
305 Sprocket
306 Gear
307 Gear
308 Sprocket
309 Box
310 Third coupling assembly

400-1, 400-2 Steering device
401A, 401Á Keyway
402A, 402Á Key
403A, 403Á Rod
404 Gear
406 Gear
407 Steering rod
410 Fourth coupling assembly
450 Gear
451 Drive shaft
452 Gear
453 Sprocket
454 Gear
455 Drive shaft

509A, 509Á Key
510 Fifth coupling assembly
511 Keyway
512A, 512Á Telescope
513A,513Á Clamp
514 Flexible plate
515 Chak
516A, 516Á Ball bearing
517A, 517Á Holes
518 Telescope
519A, 519A Holes

601A, 601Á First cylinder head, second cylinder head
602A, 602Á Cylinder
603A, 603Á Valve
604 Valve shaft
605A, 605Á Ring
606A, 606Á Gear
630A, 630Á Piston
631A, 631Á Cylinder
632A, 632Á Bush
633A, 633Á Hydraulic telescope
634 Oil sump
635A, 635Á Holes
636 Swing plate
636A,B,C Ball bearing
640A, 640Á Bush
T Longitudinal driving direction
453 Sprocket
454 Gear
455 Drive shaft

509A, 509Á Key
510 Fifth coupling assembly
511 Keyway
512A, 512Á Telescope
513A,513Á Clamp
514 Flexible plate
515 Chak
516A, 516Á Ball bearing
517A, 517Á Holes
518 Telescope
519A, 519Á Holes

601A, 601Á First cylinder head, second cylinder head
602A, 602Á Cylinder
603A, 603Á Valve
604 Valve shaft
605A, 605Á Ring
606A, 606Á Gear
630A, 630Á Piston
631A, 631Á Cylinder
632A, 632Á Bush
633A, 633Á Hydraulic telescope
634 Oil sump
635A, 635Á Holes
636 Swing plate
636A,B,C Ball bearing
640A, 640Á Bush
T Longitudinal driving direction

## Claims

1. A hand and foot driven vehicle , which can be moved by four ways of driving the vehicle, comprising:
hand drives (100-1, 100-2, 100-3, 100-4), wherein each hand drive comprises a linearly reciprocable hand drive member (4A, 4Á) that is connected with a first rotatable drive shaft (105) by means of a first coupling assembly (110);
foot drives (200-1, 200-2, 200-3, 200-4), wherein each foot drive comprises a linearly reciprocable foot drive member (5B, 5B') that is connected with a second rotatable drive shaft (205) by means of a second coupling assembly (210),
wherein:
alternative A) the hand drive (100-1) and foot drive (200-1) can only be moved forward and backward; or
alternative B) the hand drive (100-2) and foot drive (200-2) are interconnected in such a way that a forward movement of either of them corresponds with a backward movement of the other; or
alternative C) the hand drive (100-3) and foot drive (200-3) can be moved in three different ways:
- 1^{st} way: with one hand or one foot
- 2^{nd} way: with both hands or both feet together
- 3^{rd} way: by moving the hands or feet in opposite directions, or
alternative D) the hand drive (100-4) and foot drive (200-4) can be moved in four different ways, wherein the first three ways are the three ways of the hand drive (100-3) and foot drive (200-3) of alternative C) and the fourth way is the opposite movement that correspond with each other;
wherein a third coupling assembly (301, 302, 303, 304, 305, 306) is used for all hand and foot drives (100-1, 100-2, 100-3, 100-4; 200-1, 200-2, 200-3, 200-4);
the first drive shaft (105) and the second drive shaft (205) are connected with a wheel (13) in such a way that at least one wheel can be rotatable driven by the first drive shaft (105) and second drive shaft (205), both independently and jointly,
**characterized in that**
the first drive shaft (105) is driven in a constant forward rotation direction during the forward and backward movement of the hand drive member (4A, 4A): and, the second drive shaft (205) is driven in a constant forward rotation direction during the forward and backward movement of the foot drive member (5B, 5B'); and the at least one wheel can be rotatable driven independently by the first drive shaft (105) or second drive shaft (205), in which the third coupling assembly (301, 302, 303, 304, 305, 306) is arranged to transfer to the at least one wheel (13) the sum of the power delivered by the hand drive (100-1 to 4) to the first drive shaft (105) and the sum of the power delivered by the foot drive (200-1 to 4) to the second drive shaft (205), in which the first coupling assembly and second coupling assembly (110, 210) comprises a gear assembly:
a first gear (102A. 202B) which is mounted by means of a freewheel mechanism to the first and second drive shaft (105, 205) in such a way that it can freely rotate around this shaft in a first rotation direction, while it fixedly engages the first and second drive shaft in a second rotation direction that is opposite to the first rotation direction and carries it in the forward rotation direction;
a second gear (103A, 203B) which is mounted by means of a freewheel mechanism to the first and second drive shafts (105, 205) in such a way that it can freely rotate around these shafts in a second rotation direction, while it fixedly engages these shafts in a first rotation direction and carries it in the forward rotation direction;
a third gear (104A, 204B) which connects the first gear and second gear with each other in such a way that the first gear always has a rotation direction that is opposite to that of the second gear.

2. Vehicle according to claim 1, in which the first coupling assembly (110) comprises: a driving rod (101A, 101Á) provided with teeth over the entire length in the longitudinal direction (T), which is at one end fixedly connected with the hand drive member (4A, 4Á) and at the other end is located in the bush (100A, 100Á), in which the driving rod is mounted in such a way that its teeth are guided over the underlying gear of the first coupling assembly when the driving rod (101A, 101Á) is moved forward and backward using the hand drive member (4A, 4Á).

3. Vehicle according to claim 2, in which the second coupling assembly (210) comprises: a driving rod (201B, 201B') provided with teeth over the entire length in the longitudinal direction (T), which is completely located in the bush (200B, 200B') and which is at one end fixedly connected with the foot drive member (5B, 5B'), in which the driving rod is mounted in such a way that its teeth are guided over the underlying gear of the second coupling assembly if the driving rod (201B, 201B') is moved forward and backward using the foot drive member (5B, 5B').

4. Vehicle according to claim 3, in which the fifth coupling assembly (510) comprises: a number of telescopes, the lengths of which can be adjusted, in which the telescopes can be moved forward and backward in the key way (511) of the bush (200B, 200B'), wherein at the top of the telescopes, clamps (512A, 512A) are fixedly mounted and wherein one side of the flexible blade (514) is fixed between these clamps and the other side of the flexible blade (514) is loosely located between ball bearings (516A, 516A); the drive member (5B) is fixed at the top of the telescope, holes (517A, 517A) are located at the sides of the telescope (518) and holes (519A, 519A) are located at the sides of the driving rod (201B), wherein these holes are fixedly connected with each other, such that the teeth of the driving rod (201B) make contact with the teeth of the gear (201B) and the fifth coupling assembly is connected to bush (200B) using the same construction to allow a user of the vehicle to adjust the length of the telescope and to drive the vehicle with his feet in any desired way.

5. Vehicle according to claim 4, wherein each motor comprises a drive shaft (205) which is rotated by the reciprocating movement of one or more pistons in a cylinder or cylinders, wherein the forward motion of each of the pistons is delivered by ignition of fuel on each piston and the backward motion of each of the pistons is delivered by four different systems of motors. The reciprocating movement of the driving rods (201B, 201'B) and the pistons (630A, 630Á) can be stopped by the hydraulic telescopic system, such that energy in the hydraulic system can be preserved by returning the piston and drive rod.

6. Vehicle according to claim 5,
wherein in the first, second and fourth motors, the system is arranged to rotate the gears of the second coupling assembly (210) by reciprocating movement of the piston or pistons (630A, 630A) and driving rod or driving rods (201B, 201B'), such that the second drive shaft (205) of the motors only rotates in a forward rotation direction; wherein the third motors the system is arranged to rotate the shaft (205) of motors by a single gear (202B, 202B').

7. Vehicle according to claim 6, wherein the first system the two ends of the driving rod (201B) of the second coupling assembly (210) form the piston of the motor and both ends of bush (200B) form the cylinders (602A, 602A) of the motor, such that the pistons move in the cylinders in a reciprocating way.

8. Vehicle according to claim 6, wherein in the second system, comprises two pistons, which are located in two juxtaposed cylinders (631) and the teeth of gear (202B) of the second coupling assembly (210) are in contact with the teeth of driving rods (201B, 201B') of the second coupling assembly (210), such that when one piston move downwards, the other piston moves upwards.

9. Vehicle according to claim 6, wherein in the third systems by forward movement of piston (630A, 630Á) and driving rod (201B, 201B') a single gear (202B, 202B') and the drive shaft (205) is rotated in a forward rotational direction and each gear is connected to the drive shaft (205) by a freewheel mechanism, wherein by backward motion of each piston (630A, 630Á) and driving rod (201B, 201B') a single gear (202B, 202B') is rotated freely around the drive shaft (205) such that each piston can be returned by the hydraulic system (633A, 633Á) or the crankshaft (636) of by two hydraulic systems, which are interconnected.

10. Vehicle according to claim 6, wherein in the fourth system a second cylinder head (601) is mounted to the bottom side of the cylinders (631), wherein the second cylinder head (601) is provided with holes (635A, 635Á), wherein each hole is surrounded by springs, such, that the reciprocating movement of each piston in its cylinder is provided by a first explosion from the upper side of the piston and a second explosion from the bottom side of the piston.

## Patentansprüche

1. Ein Fahrzeug, das von Muskelkraft (Hände und Füße) angetrieben wird, kann auf folgenden vier Art und Weisen bewegt werden.
Handantriebe (100-1, 100-2, 100-3, 100-4), bei denen jeder Handantrieb aus einem linearen Handantriebsteil (4A) oder (4A') besteht, das mit mit dem ersten Verbindungsteil (110) mit der ersten Antriebswelle (105) verbunden ist.
Fußantriebe (200-1, 200-2, 200-3, 200-4), bei denen jeder Fußantrieb aus einem linearen Fußantriebsteil (5B) oder (5B.5B') besteht, das mit dem zweiten Verbindungsteil (210) mit der zweiten Antriebswelle (205) verbunden ist,
in dem:
Alternative A: Der Handantrieb (100-1) und der Fußantrieb (200-1) können sich nur vorwärts und rückwärts bewegen;
oder
Alternative B: Der Handantrieb (100-2) und der Fußantrieb (200-2) sind so miteinander verbunden, das der eine sich vorwärts und der andere sich rückwärts bewegt;
oder
Alternative C: Der Handantrieb (100-3) und der Fußantrieb (200-3) auf folgenden Art und Weisen bewegen:
Methode 1: Mit einer Hand und einem Fuß;
Methode 2: Mit zwei Händen oder zwei Füßen gleichzeitig;
Methode 3: Durch die Bewegung der Hände oder Füße in entgegengesetzter Richtung
oder
Alternative D: Der Handantrieb (100-4) und der Fußantrieb (200-4) können sich auf vier verschiedene Weisen bewegen. Das sind die drei Varianten aus C, die den Handantrieb (100-3) und den Fußantrieb (200-3) betreffen und eine vierte Variante, bei dem es sich jeweils um eine Bewegung in entgegengesetzter Richtung handelt. Beim Hand- und Fußantrieb (100-1, 100-2, 100-3, 100-4, 200-1, 200-2, 200-3, 200-4) wird das dritte Verbindungsteil (310) genutzt.
Die erste (105) und die zweite Antriebswelle (205) sind durch ein Rad (13) miteinander verbunden, sodass sich mindestens ein Rad durch die erste (105) und die zweite Antriebswelle (205) eigenständig aber auch gemeinsam bewegen kann.
**Dadurch gekennzeichnet dass**:
Die erste Antriebswelle (105) wird während der Vor- und Rückwärtsbewegung des Handantriebelementes (4A) oder (4A') in Richtung einer konstanten Vorwärtsdrehung bewegt und die zweite Antriebswelle (205) wird während der Vor- und Rückwärtsbewegung des Fußantriebelementes (5B) oder (5B', 5B) in Richtung einer konstanten Vorwärtsdrehung bewegt und mindestens ein Rad kann eigenständig durch die erste (105) oder zweite Antriebswelle (205) gedreht werden, in welchem das dritte Verbindungsteil (310) so angeordnet ist, dass die gesammte, durch den Handantrieb übertragene Kraft (100-1 bis 100-4) auf die erste Antriebswelle (105) und die gcsammtc, durch den Handantrieb übertragene Kraft (200-1 bis 200-4) auf die zweite Antriebswelle (205) (zumindest auf eines der Räder) überträgt, in dem das erste und zweite Verbindungsteil (110- 210) aus mehreren Zahnrädern besteht.
Das erste Zahnrad (102A, 202B) wird durch ein Freiradmeehanismus mit der ersten und der zweiten Antriebswelle (205, 105) verbunden, sodass es sich frei um die Antriebswellen in die erste Drchrichtung drehen kann, während es in der zweiten Drchrichtung (in entgegengesetzter Richtung zu der ersten), ständig mit der ersten und zweiten Antriebswelle verhackt ist und diese in die Richtung der Vorwärtsdrehung zieht.
Das zweite Zahnrad zur, 203B) wird durch ein Freiradmechanismus mit der ersten und der zweiten Antriebswelle (205, 105) verbunden, sodass es sich frei um die Antriebswellen in die zweite Drchrichtung drehen kann, während es in der ersten Drchrichtung, ständig mit der ersten und zweiten Antriebswellen verhackt ist.
Das dritte Zahnrad (104A, 204B) verbindet das erste und das zweite Zahnrad, sodass sich das erste und das zweite Zahnrad immer in entgegengesetzter Richtung drehen.

2. Gemäß 1, besteht das erste Verbindungsteil (110) der Fahrzeuge aus einer gezahnten Treibstange (101A oder 101A'), die auf der gesammten Strecke (T) genutzt worden ist und an einem Ende an dem Handantriebselement (4A' oder 4A) befestigt ist und dessen andere Ende in einer Buchse (100A' oder 100A) steckt und in dem Moment, wo sich die Treibstange (101A' oder 101A) mithilfe vom Handantriebsteil (4A' oder 4A) vor- und rückwärts bewegt, die Antriebswelle so justiert wird, dass ihre Zähne auf das unterste Zahnrad des ersten Verbindungsteil liegt und geführt wird.

3. Gemäß 1, besteht das zweite Verbindungsteil (110) der Fahrzeuge aus einer gezahnten Treibstange (201A oder 201A'), die auf der gesammten Strecke (T) genutzt worden ist und vollständig in der Buchse (200B' oder 200B) steckt und an einem Ende an der Fußantrieb (5B' oder 5B) befestigt ist und in dem Moment, wo sich die Treibstange (201B' oder 201B) mithilfe vom Fußantriebsteil (5B' oder 5B) vor- oder rückwärts bewegt, die Treibstange so justiert wird, dass die Zähne auf das unterste Zahnrad des zweiten Verbindungsteil liegt und geführt wird.

4. Gemäß 3, in dem das fünfte Verbindungsteil (510) aus mehreren teleskopförmigen Teilen besteht, deren Länge verstellbar ist und sich auf der Schlüsselstreeke (511) der Büchsenteile (200B' oder 200B) vor- oder rückwärts bewegen können, wo oberhalb der teleskopförmigen Teile, mehrere Klemmen befestigt worden sind und auf der einen Seite der biegsamen Klinke (514) zwischen den Klemmen und der anderen Seite der Klinge (514) fixiert ist und frei zwischen den Kugellagern (516A', 516A) liegt. Das Antriebselement (5B) ist über dem Teleskopteil fixiert worden, die Löcher (517A, 517A') liegen auf beiden Seiten des Teleskopteils (518) und die Löcher (519A, 519A') auf beiden Seiten der Antriebswelle (201B) und die sind miteinander verbunden, sodass die Zähne der Antriebswelle (201B) und des Zahnrades (201B) ineinandergreifen und damit sich jeder Fahrzeugnutzer das Teleskopteil passend verstellen und das Fahrzeug mit eigenen Füßen fahren kann wie er will, ist das fünfte Verbindungsteil nach dem selben Prinzip mit der Buchse (200B) verbunden.

5. Gemäß 4, besteht jeder Motor aus einer Antriebswelle (205), die durch die Hin- und Herbewegung einer oder mehreren Kolben in einem oder mehreren Zylinder gedreht wird, wobei die Vorwärtsbewegung jeder Kolbe durch den Verbrennungsvorgang in jedem Zylinder und die Rückwärtsbewegung jeder Kolbe je nach Motorsystem (es gibt vier verschiedene Systeme) initiiert wird. Die Hin- und Herbewegung der Antriebswellen (201B', 201B) und Kolben (630A', 630A) kann durch das hydraulisch- teleskopisches System abgebrochen werden, sodass nach Rückkehr der Kolbe und Antriebswelle, die Energie des hydraulischen Systems bewahrt werden kann.

6. Gemäß 5, ist das System im Falle vom ersten, zweiten und vierten Motor für die Drehbewegung der Zahnräder des zweiten Verbindungsteils (210) durch die Hin- und Herbewegung der einen bzw. mehreren Kolben und eine bzw. mehrere Antriebswellen eingestellt worden, sodass die zweite Antriebswelle des Motors (205) nur vorwärts dreht. Im Motor Nr. 3 ist das System so eingestellt, dass die Drehung der Antriebswellen (205) nur durch ein Zahnrad (202B', 202B) initiiert wird.

7. Gemäß 6, bilden die beiden Enden der Antriebsstange (201B) des zweiten Verbindungsteils (210), die Kolben des Motors und beide Seiten der Buchse (200B), die Zylinder des Motors (602A', 602A), sodass sich die Kolben in den Zylindern hin- und herbewegen.

8. Gemäß 6, besteht das zweite System aus zwei Kolben, die in zwei nebeneinander liegenden Zylinder (631) platziert sind und die Zähne des Zahnrads (202B) des zweiten Verbindungsteils (210) und die Zähne der Antriebswelle (201B', 201B) des zweiten Verbindungsteils (210) ineinander verzahnt sind, sodass die Kolben sich in entgegengesetzter Richtung bewegen.

9. Gemäß 6, drehen sich im System Nr. 3 mit der Vorwärtsbewegung der Kolbe (630A', 630A) und der Antriebsstange (201B', 201B), ein Zahnrad (202B', 202B) und die Antriebswelle (205) vorwärts und jedes Zahnrad ist durch Freiradmechanismus mit einer Antriebswelle verbunden, während sich das Einzelzahnrad (202B', 202B) mit der Rückwärtsbewegung jeder Kolben (630A', 630A) und der Antriebsstange (201B', 201B), um die Antriebswelle frei dreht, sodass jede Kolbe durch das Hydrauliksystem (633A', 633A) bzw. die Antriebsstange (636) in zwei Hydrauliksystemen, die miteinander in Verbindung stehen, zurückgestellt werden kann.

10. Gemäß 6, ist der zweite Zylinderkopf (601) im System Nr. 4 im unteren Bereich des Zylinders (631), wo der zweite Zylinderkopf (601) einige Löcher hat (635A', 635A) montiert, wo jedes Loch von Federn umgeben ist, sodass die Hin- und Herbewegung jeder Kolben im Zylinder durch die erste Verbrennung am obersten Bereich der Kolbe und die zweite am untersten Bereich der Kolbe verursacht wird.

## Revendications

1. Un véhicule dont la force motrice est fournie par la main et le pied peut être déplacé par quatre manières de conduire :
Des propulseurs à main (100-1, 100-2, 100-3, 100-4), dans lequel chaque propulseur à main comprend un élément de commande manuelle linéaire à deux côtés (4A) ou (4A') qui est relié à un premier arbre rotatif (105) au moyen d'une première pièce de jonction (110);
Des propulseurs à pied (200-1, 200-2, 200-3, 200-4), dans lequel chaque propulseur à pied comprend un élément de commande à pied, linéaire à deux côtés (5B) ou (5B, 5B') qui est relié à un second arbre rotatif (205) au moyen d'une seconde pièce de jonction(210),
où:
La solution de remplacement A) le propulseur à main (100-1) et le propulseur à pied (200-1) ne peuvent se déplacer que vers l'avant et vers l'arrière;
ou
La solution de remplacement B) le propulseur à main (100-2) et le propulseur à pied (200-2) sont interconnectés de telle sorte qu'un mouvement vers l'avant de l'un d'entre eux correspond à un mouvement vers l'arrière de l'autre,
ou
La solution de remplacement C) le propulseur à main (100-3) et le propulseur à pied (200-3) peuvent être déplacés de trois façons différentes:
1: d'une main et d'un pied
2: avec les deux mains ou les deux pieds ensemblé
3: en déplaçant les mains ou les pieds en direction opposée,
ou
La solution de remplacement D) le propulseur à main (100-4) et le propulseur à pied (200-4) peuvent être déplacés de quatre façons différentes, les trois premières façons sont celles du propulseur à main (100-3), à pied (200 -3) de la solution de remplacement C, la quatrième est le mouvement opposé des autres mouvements,
Dans toutes sortes des propulseurs à main et à pied (100-1, 100-2, 100-3, 100-4, 200-1, 200-2, 200-3, 200-4) la troisième pièce de jonction (310) est utilisée ;
Le premier arbre d'entraînement (105) et le second arbre d'entraînement (205) sont reliés par une roue (13) de telle manière qu'au moins une roue peut être entraînée en rotation par le premier arbre d'entraînement (105) et le second arbre d'entraînement (205), indépendamment et conjointement,
Là est précisé :
Le premier arbre d'entraînement (105) est entraîné constamment dans une direction de rotation vers l'avant pendant le mouvement vers l'avant et vers l'arrière du propulseur à main(4A) ou (4A'), et le second arbre d'entraînement (205) est entraîné constamment dans une direction de rotation vers l'avant pendant le mouvement vers l'avant et vers l'arrière du propulseur à pied (5B) ou (5B, 5B'); au moins une roue peut être entraînée en rotation de manière indépendante par le premier arbre d'entraînement (105) ou le second arbre d'entraînement (205), dans lequel la troisième pièce de jonction(310) est agencé pour transférer à au moins une roue la somme de la puissance délivrée par le propulseur à main (100-1 à 100-4) au premier arbre d'entraînement (105) et la somme de la puissance délivrée par le propulseur à pied (200-1 à 200-4) au second arbre d'entraînement (205), dans lequel le premier et le second pièces de jonction (110- 210) comprennent un ensemble d'engrenages ;
Le premier engrenage (102 A, 202 B) est monté au moyen d'un mécanisme de roue libre aux premier et second arbres d'entraînement (105, 205) de manière à pouvoir tourner librement autour de ces arbres dans un premier sens de rotation, tandis que il engage de manière fixe dans les premier et second arbres d'entraînement dans une seconde direction de rotation qui est opposée à la première rotation et la porte dans le sens de rotation vers l'avant ;
Le deuxième engrenage (103 A, 203 B) est monté au moyen d'un mécanisme de roue libre aux premier et second arbres d'entraînement (105, 205) de manière à pouvoir tourner librement autour de ces arbres dans un second sens de rotation, tandis que Il engage de manière fixe dans les premier et second arbres d'entraînement dans une première direction de rotation ;
Le troisième engrenage (104A, 204B) relie les premiers et seconds engrenages les uns aux autres de telle sorte que les premiers engrenages ont toujours une direction de rotation opposée à celle des deuxièmes engrenages.

2. Selon la prétention 1, la première pièce de jonction (110) comprend un vilebrequin (101A ou 101A') muni de dents utilisé sur toute la longueur (T), qui est à une extrémité reliée au propulseur à main (4A ou4A') et à l'autre extrémité est situé dans une rondelle (100A ou 100A'). Le vilebrequin est monté de telle sorte que ses dents sont guidées sur l'engrenage situé au-dessous de la première pièce de jonction lorsque le vilebrequin (101A ou 101A') est déplacé vers l'avant et vers l'arrière en utilisant le propulseur à main (4A ou 4A').

3. Selon la prétention 1, la deuxième pièce de jonction (110) comprend: un vilebrequin (201A ou 201A') muni de dents utilisé sur toute la longueur (T), qui est complètement situé dans La douille (200B ou 200B') et qui est à une extrémité relié de manière fixe au propulseur à pied (5B ou 5B'). Le vilebrequin est monté de telle sorte que ses dents sont guidées sur l'engrenage situé au-dessous de la deuxième pièce de jonction lorsque le vilebrequin (201B ou 201B') est déplacé vers l'avant et vers l'arrière en utilisant le propulseur à pied (5B ou 5B').

4. Selon la prétention 3, la cinquième pièce de jonction (510) comprend: un certain nombre de pièces télescopiques dont les longueurs peuvent être réglées et qui peuvent être déplacées vers l'avant et vers l'arrière dans le sens clé (511) des rondelles (200B ou 200B'), où sont installées des pinces (512A ou 512A') au-dessus des pièces télescopiques. La lame flexible (514) est monté dans un côté entre les pinces, la lame flexible (514) dans l'autre côté. De plus elle est située librement entre les roulements à billes (516A ou 516A'), l'élément propulseur (5B) est fixé au-dessus de la pièce télescopique. Les trous (517A ou 517A') sont situés sur les côtés de la pièce télescopique (518) et les trous (519A ou 519A') sont situés sur les côtés du vilebrequin (201B). Ils sont reliés l'un à l'autre de telle sorte que les dents du vilebrequin (201B) entrent en contact avec les dents de l'engrenage (201B) et la cinquième pièce de jonction est relié à la douille (200B) en utilisant la même construction pour permettre à un utilisateur du véhicule de régler la longueur du télescope et conduire le véhicule avec ses pieds de la manière souhaitée.

5. Selon la prétention 4, chaque moteur comprend un arbre d'entraînement (205) qui tourne par le mouvement de va-et-vient d'un ou plusieurs pistons dans un ou cylindres, dans lequel le mouvement vers l'avant de chacun des pistons est délivré par allumage de carburant sur chaque piston et le mouvement vers l'arrière de chacun des pistons sont délivrés par quatre systèmes différents de moteurs. Le mouvement de va-et-vient des vilebrequins (201B, 201B') et des pistons (630A, 630A') peut être arrêté par le système télescopique hydraulique, de sorte que l'énergie dans le système hydraulique peut être conservée en retournant le piston et le vilebrequin.

6. Selon la prétention 5, dans les premier, deuxième et quatrième moteurs, le système est agencé pour faire tourner les engrenages de la seconde pièce de jonction (210) par un mouvement de va-et-vient d'un ou plusieurs pistons (630A, 630A') et d'un ou plusieurs vilebrequins (201B, 201B'), de sorte que le second arbre d'entraînement du moteur(205)ne tourne que dans un sens de rotation vers l'avant ; en ce qui concerne le troisième moteur, le système est agencé par un seul engrenage (202B, 202B') pour faire tourner les arbres du moteur (205).

7. Selon la prétention 6, dans le premier système, les deux extrémités du vilebrequin (201B) de la seconde pièce de jonction(210) constituent le piston du moteur et les deux extrémités de la rondelle (douille) (200B) constituent les cylindres du moteur (602A, 602A'), de sorte que les pistons se déplacent dans les cylindres de manière réciproque.

8. Selon la prétention 6, le second système comprend deux pistons qui sont situés dans deux cylindres juxtaposés (631) et les dents de l'engrenage (202B) de la seconde pièce de jonction (210) sont en contact avec les dents du vilebrequin (201B, 201B') de la seconde pièce de jonction, de sorte que lorsqu'un piston se déplace vers le bas, l'autre se déplace vers le haut.

9. Selon la prétention 6, le troisième système est tourné dans une rotation vers l'avant par déplacement vers l'avant du piston (630A, 630A') et du vilebrequin(201B, 201B') d'un seul engrenage (202B, 202B') et de l'arbre d'entraînement (205) et chaque engrenage est relié à un arbre d'entraînement (205) par un mécanisme libre, tandis que, par un mouvement vers l'arrière de chaque piston (630A, 630A') et du vilebrequin(201B, 201B'), l'engrenage unique (202B, 202B') tourne librement autour de l'arbre d'entraînement (205), de sorte que chaque piston peut être renvoyé par le système hydraulique (633A, 633A') ou le vilebrequin (636) qui existe dans les deux systèmes hydrauliques qui sont interconnectés.

10. Selon la prétention 6, dans le quatrième système, la deuxième culasse (601) est montée sur le côté inférieur du cylindre (631) où la seconde culasse (601) est pourvue de trous (635 A, 635A'). Là chaque trou est entouré par des ressorts, de sorte que le mouvement de va-et-vient de chaque piston dans son cylindre est fourni par une première explosion du côté supérieur du piston et une deuxième explosion du côté inférieur du piston.
